# EUROPEAN PATENT SPECIFICATION

(11) **EP 4 251 882 B1**
(45) Date of publication and mention of the grant of the patent: **11.11.2026**
(21) Application number: 21815679.2
(22) Date of filing: 17.11.2021
(51) Int. Cl.: F04B 37/08, F04B 51/00, F04B 49/06

(54) **MONITORING THE PERFORMANCE OF A CRYOPUMP**
ÜBERWACHUNG DER LEISTUNG EINER KRYOPUMPE
SUIVI DES PERFORMANCES D'UNE CRYOPOMPE

(30) Priority: 25.11.2020 GB 202018534
(43) Date of publication of application: 04.10.2023
(73) Proprietor: Edwards Vacuum LLC, Sanborn, NY 14132 (US)
(72) Inventor: CASELLO, John, Chelmsford, Massachusetts MA01824 (US); COLLINS, Mark Steven, Chelmsford, Massachusetts MA 01824 (US); YOUNG, Charles Hamilton, Chelmsford, Massachusetts MA 01824 (US)
(74) Representative: Norton, Ian Andrew
(86) International application number: PCT/IB2021/060663
(87) International publication number: WO 2022/112903

(56) References cited:
- WO-A2-90/02878
- US-A- 4 958 499
- US-A1- 2001 012 485
- US-A1- 2016 245 270

## Description

### FIELD OF THE INVENTION

The field of the invention relates to cryopumps and to a method and circuitry for monitoring the performance of a cryopump.

### BACKGROUND

Cryopumps work on the principle of condensing or trapping the gases to be pumped. This means that the cryopump needs to be periodically regenerated to remove the trapped gas. Regeneration involves isolating the pump from the vacuum system and warming the pump up while introducing purge gases to dilute the trapped gas that is desorbed or vapourised by the warming.

If a cryopump/system is not performing to its specifications and is degrading slowly but without affecting the customer process it could fail unexpectedly. This can be extremely expensive for the user of the cryopump, especially if the cryopump is being used for a process such as integrated circuit manufacturer.

It would be desirable to provide a method and/or diagnostic system able to monitor the current health or performance of a cryopump and to determine pump degradation and thus, predict future poor performance or failures. An ability to predict performance degradation allows a service engineer to intervene prior to the degradation impacting unduly on the process being pumped.

US 4 958 499 describes a method and apparatus for checking the operation of a refrigerator-operator cryogenic pump having a cold head with at least one refrigerating unit that is equipped with a pump surface. Various data of the cryogenic pump, particularly the net refrigerating power of the refrigerating unit, are interrogated under various operating conditions and these data are compared to rated data.

### SUMMARY

A first aspect provides a method of monitoring the performance of a cryopump, said method comprising: following completion of a regeneration cycle controlling said cryopump to perform a predetermined test routine for testing a performance of said cryopump under predetermined conditions; monitoring said cryopump during said predetermined test routine to collect data indicative of said performance of said cryopump; storing said data indicative of said pump collected during said monitoring, characterised in that said step of controlling said cryopump to perform a predetermined test routine comprises:
controlling a variable speed motor controlling a flow of refrigerant through a refrigerating system of said cryopump to operate at a predetermined speed;
setting a first predetermined temperature for a first stage of a refrigerator and a second predetermined temperature for a second stage of said refrigerator; and
controlling heaters associated with said first and second stages of said refrigerator such that said first and second predetermined temperatures are maintained; and
said step of determining the performance of said cryopump comprises determining power applied to said heaters maintaining said first and second predetermined temperatures.

Cryopumps are periodically regenerated to remove the accumulated condensed gases. This is done while the pump is not being used to pump a vacuum chamber so that during regeneration the pump is generally under the control of control circuitry associated with the pump rather than being actively used for cryopumping process gasses in the vacuum chamber. Furthermore, the gate valve to the vacuum chamber is closed.

Furthermore, once the regeneration cycle has completed the state of the pump is known and the gate valve to the vacuum chamber evacuated by the pump is closed. This therefore provides a period which is ideal for the execution of a test routine, as the vacuum system evacuated by the pump will not be affected and the condition of the pump is known. Thus, the behaviour of the pump during a test routine executed at this time will be indicative of the pump's current performance and is independent of the vacuum system it evacuates and any collected condensed material. This means that any comparison of a current test with previous tests which have been performed under near identical conditions will provide an accurate picture not only of the current health of the pump but also an indication of how this health or performance has changed over time. Additionally, as regeneration occurs periodically this provides opportunities to perform these tests regularly and thus, any degradation of the pump can be regularly monitored.

In some embodiments, said method controls said cryopump to perform said predetermined test routine periodically after at least a subset of said regeneration cycles.

In order to monitor degradation of the pump and to be able to predict pump failure before it happens, it is preferable that any pump testing routine is performed regularly. As regeneration cycles are performed periodically the test routine may be performed after a certain proportion of these regeneration cycles, perhaps after each regeneration cycle or perhaps after alternate regeneration cycles.

In some embodiments, the method comprises a further step of determining said performance of said pump from said collected data.

The data collected is indicative of the current performance of the pump, and the method may analyse the data to determine the performance.

In some embodiments said step of determining said performance of said pump comprises comparing data obtained from a current test routine with data obtained from previous test routines.

The absolute value of data obtained from a test routine is indicative of the pump's current performance and comparing the data with data of other earlier test results, provides an effective indication of any changes in the pump's performance and indeed the rate change of the pump's performance and thus, may be helpful in providing a prediction of when a pump may fail.

In some embodiments, said method comprises a further step of outputting data indicative of said pump performance.

The data collected may be output. It may be output as raw data or as processed data, in some embodiments as an indicator indicative of the pump's performance. The indicator may be accessible to the pump operator. The indicator may be in the form of a numerical performance indication, or a colour coded indication. Where the performance is determined to be low the indicator may indicate that a service engineer's input is desirable. The pump performance indicator may be generated in response to the collected data values and/or to changes in the collected data values when compared to those collected during pervious tests. Changes in the collected values indicate a deterioration in the performance of the pump and provide a basis for predicting a future performance of the pump, allowing the pump to be replaced before it fails or its performance degrades unduly.

In some embodiments, said step of outputting said data comprises receiving a request for said data and outputting said data in response to said request.

The request may be from a service engineer at the site of the pump and the data may be output via a port on the pump, or it may be a request from a remote server and the data may be output across a network to the remote server.

Said step of controlling said cryopump to perform a predetermined test routine comprises: controlling a variable speed motor controlling a flow of refrigerant through a refrigerating system of said cryopump to operate at a predetermined speed; setting a first predetermined temperature for a first stage of a refrigerator and a second predetermined temperature for a second stage of said refrigerator; and controlling heaters associated with said first and second stages of said refrigerator such that said first and second predetermined temperatures are maintained; and said step of determining the performance of said cryopump comprises determining power applied to said heaters maintaining said first and second predetermined temperatures.

The level of cooling provided by the cryopump is a function of the power applied to the heaters. In this regard, as the cryopump's performance deteriorates over time then the cooling provided by the pump decreases and the amount of power applied to the heaters to maintain the temperatures will also decrease and be indicative of this deterioration in performance.

In some embodiments, the method comprises a further step of receiving an input indicative of at least one of said predetermined temperatures and said predetermined motor speed, said method being configured to perform subsequent test routines using said received at least one of said predetermined temperatures and motor speed.

In some embodiments, a service engineer may be able to update the predetermined temperatures and/or motor speeds of the test where it may be desirable to change the testing conditions perhaps to reflect the current or future conditions of use of the cryopump.

A second aspect provides a computer program comprising computer readable instructions which when executed by a processor control said processor to perform steps in a method according to a first aspect.

A third aspect provides control and diagnostic circuitry for a cryopump, said control circuitry being configured to determine when a regeneration cycle has completed and to control said cryopump following completion of said regeneration cycle to perform a predetermined test routine for testing a performance of said cryopump under predetermined conditions; and said diagnostic circuitry is configured to: monitor said performance of said cryopump during said predetermined test routine; and store data indicative of said performance obtained from said monitoring, and characterised in that said control circuitry is configured to control said cryopump to perform said predetermined test routine by:
controlling a variable speed motor controlling a flow of refrigerant through a refrigerating system of said cryopump to operate at a predetermined speed;
setting a first predetermined temperature for a first stage of a refrigerator and a second predetermined temperature for a second stage of said refrigerator; and
controlling heaters associated with said first and second stages of said refrigerators such that said first and second predetermined temperatures are maintained; and
said diagnostic circuitry is configured to determine a power applied to said heaters maintaining said first and second predetermined temperatures.

**In** some embodiments, said control circuitry is configured to control said cryopump to perform said predetermined test routine periodically after at least a subset of said regeneration cycles.

**In** some embodiments, said diagnostic circuitry is configured to determine a performance of said pump from said collected data.

**In** some embodiments, said diagnostic circuitry is configured to determine said performance of said pump by comparing data obtained from a current test routine with data obtained from previous test routines.

**In** some embodiments, said diagnostic circuitry is configured to output an data indicative of a performance of said pump .

In some embodiments, said diagnostic circuitry is configured to output said data in response to receiving a request for said data.

A fourth aspect provides a cryopump comprising: a refrigerator unit; a variable speed motor for controlling a flow of refrigerant through a cooling system of said cryopump; and control and diagnostic circuitry according to a third aspect.

In some embodiments, said refrigerator unit comprises a two stage refrigerator; and said cryopump further comprises: a temperature sensor for monitoring a temperature of said first stage of the refrigerator and a temperature sensor for monitoring a temperature of said second stage of the refrigerator; and a heater for supplying heat to said first stage and a heater for supplying heat to said second stage of the refrigerator.

In some embodiments, the control circuitry is further configured to control the regeneration of the pump.

The regeneration cycles performed by the pump will be under the control of control circuitry associated with the pump and this same control circuitry may be used to control execution of the test routine.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 shows a cryopump, and control and diagnostic circuitry according to an embodiment; and
Figure 2 shows a flow diagram illustrating steps in a method according to an embodiment.

### DESCRIPTION OF THE EMBODIMENTS

Before discussing the embodiments in any more detail, first an overview will be provided.

Embodiments provide a software-based function that is able to help determine a pump's ability to perform in a customer's operational environment. The software-based function controls the pump to perform a diagnostic test following a regeneration cycle and the information collected during the periodic diagnostic tests may be made available to service engineers to help determine the current refrigeration capacity of the pump.

In some embodiments, the cryopump comprises a variable speed motor and is configured to be operated at several operating RPM's including 72 rpm and several operating 1st and 2nd stage temperatures including 65K,13.5K. During the test routine the pump may be controlled to operate at this fixed operating state 1st and 2nd stage temperatures typically being 65, 13.5 K and motor 72 RPM, and there will be a resulting amount of heater power applied to heaters which may be measured as a % of a maximum amount or actual watts. These power measurements are the indicator of the available refrigeration capacity and thus, the performance of the cryopump.

In some embodiments, a new pump will be tested with the test routine and the results compared with the results of subsequent test routines performed after each regeneration on the customer's tool. The results from the production test and first regeneration will be used as a baseline to monitor the pump's performance after each cooldown to keep a running trendline of performance.

The cryopump will be regenerated in the usual way and then within the "cooldown" phase of the set routine it is may be "health checked" by performing the test routine.

This procedure can be performed by a heat load calculated in Watts applied by the module to maintain predetermined temperatures such as 65K 1st stage and 13.5K 2nd stage at a set rpm of the motor/regenerators.

In some embodiments, the control circuitry will also provide an option to allow a service engineer to run a diagnostic Health check with parameters they choose by sending a special command to the module.

Regeneration is a process of warming the cryopanel surfaces with electric heaters located on the 1st and 2nd stages. N₂ gas is utilized to dilute H₂ gasses pumped into the charcoal of the 2nd stage on implant pumps. Then a rough/purge process is used to clean the cryopump stages at an increased temperature such as 310K and in some cases up to as high as 330K to liberate the trapped gasses out of the pressure relief valve to a gas scrubber.

The cryopump is then cooled to a set temperature, in one example 290K and evacuated to a set vacuum, for example ~50 microns, then to check the effectiveness of the evacuation a rate of rise test ROR is conducted until it has passed a predetermined value of say 10 microns per minute.

After the ROR is passed the motor is started and the cryopump cools to the base temperatures which in some examples such as implant pumps is 65K /13.5K and after performing the Health Check it is ready to be utilized by the user and it is "regen complete".

The cryopumps use a variable speed in some embodiments any speed between 30 and 144 rpm motor to drive the regenerators within the cylinder to utilize the helium expansion for cooling the dual "stages" of the refrigerator.

The revolutions per minute of the regenerators have a direct influence on the amount of cooling power or watts that the refrigerator can maintain at a set temperature.

A regeneration is described as the pump going through a set routine to warm, purge and evacuate the pump so it can be cooled down to operating temperatures the regen complete signals the customer it is ready for use.

This test routine will be run after regenerations and whenever a service engineer has access to the cryopump module and commands the test routine. Performance capabilities will be compared to previous tests to predict with the aid of service engineers the cryopump/system's performance.

Performance, dependability and safety are vital to user's of the pumps, thus being able to predict unexpected occurrences is paramount.

The health check routine is designed to look at the pump's performance over time and aid service engineers to identify possible degradation to this performance.

This allows the service engineers to visit the customer to diagnose the possible issues with the system to alleviate the issue. This may involve maintenance of the system or removal/repair of the pump/compressor or accessory prior to it disrupting the customer process and thereby reducing system tool down time.

The data collected during the test routine is stored in a data store associated with the pump and may be pulled from the data store by a service engineer or transmitted to a remote server that analyses the data in response to a signal received from the remote server requesting the data. The data may be analysed to determine both the current performance and changes in performance of the pump over time.

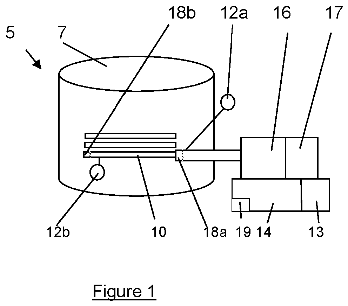

Figure 1 shows a cryopump 5 according to an embodiment. Cryopump 5 is cooled by refrigeration unit 16 which is controlled by control and diagnostic circuitry 14. The refrigeration unit 16 comprises a cold finger extending into the cryopump vessel and comprises a first stage which cools the inner surface of the vessel and a frontal array (not shown) arranged across the inlet 7 and a second stage which cools the cryopanels 10 to a cooler temperature than the temperature of the first stage. The refrigerator comprises a variable speed motor 17 which drives the refrigerant, in this case helium around the refrigeration system.

There are heaters 18a and 18b associated with the first and second stage refrigerators respectively and these can be used to provide heat during regeneration and testing of the cryopump.

Cryopump 5 is used to evacuate a vacuum chamber to a high vacuum. The vacuum chamber may be used in, for example, semiconductor processing such as chip manufacture. The cryopump is a capture pump whereby gas molecules entering the cryopump are captured by condensing or adsorbing them on the cooled surfaces of the cryopump. This means that periodically the cryopump will need to be regenerated to remove the captured condensed gas.

Control circuitry 14 controls the operation of the cryopump and during regeneration of the cryopump will control the regeneration cycle. During the regeneration cycle the cryopump is isolated from the vacuum chamber generally by a gate valve and heaters 18a, 18b are used to increase the temperature of the cryopump while purge gases are input to remove any evaporated molecules. This regeneration is carried out periodically when the condensed matter in a pump rises above a value whereby the pump stops operating efficiently.

In addition to controlling the regeneration cycle, control and diagnostic circuitry 14 may be configured to perform a test routine upon completion of the regeneration cycle when the status of the cryopump is known. This test routine is used to determine the health or performance of the pump and allows degradation of the pump's performance to be monitored and failure of the pump predicted before it occurs. Unexpected failure of a pump can be very expensive particularly where the pump is used in chip manufacture and thus, predicting a failure in advance and allowing the pump to be swapped before it fails has many advantages.

The test routine is used to determine the current cooling capacity of the cryopump 5 when a motor within refrigeration unit 16 is operating at a constant speed. The motor within refrigeration unit 16 sends the refrigerant in this case helium around the refrigeration system and is generally a variable speed motor allowing the capacity of the pump and the cooling power to be changed. During the test routine the pump's speed is set to a predetermined value and the temperature sensors 12a and 12b are used to determine the temperatures of the first and second stage refrigerator and transmit the signals to circuitry 14. Circuitry 14 controls heaters 18a and 18b associated with the first and second stage refrigerator such that the temperature of the first and second stage refrigerators are maintained at certain predetermined values. These values may be selected as the normal operating temperature of the cryopump. The amount of power required by the heaters to maintain this temperature is indicative of the cooling power of the cryopump 5 and may be stored in a data store 13. A service engineer can then access this data store and determine the current performance and any changes in performance along with a rate of change in performance of the cryopump over time.

In some embodiments, there is also provided an input/output port 19 which may be used to output the current performance of the cryopump to an operator. This may be output as an indicator which may be accessed by the operator of the pump. This indicator may be a numerical value indicative of the current performance of the pump which may relate to a percentage of the optimum performance or it may simply be a colour indicative of whether the performance is currently good or not so good. In some cases it may contain an indication that a service engineer should be contacted. In other cases the data may be output via a transmitter to a remote server configured. This may occur in response to receipt of a request for the data from the remote server. The remote server may be a server configured to analyse data received from multiple pumps and to monitor their performance and any changes in performance from this data.

In some embodiments input/output port 19 may also be used to receive values input by a service engineer indicative of the motor speed and/or first and second stage temperatures to be used in the test routine. This allows these values to be updated as required. In this regard, depending on the operating conditions of the pump, different temperatures and/or motor speeds may be more appropriate for the testing of the pump.

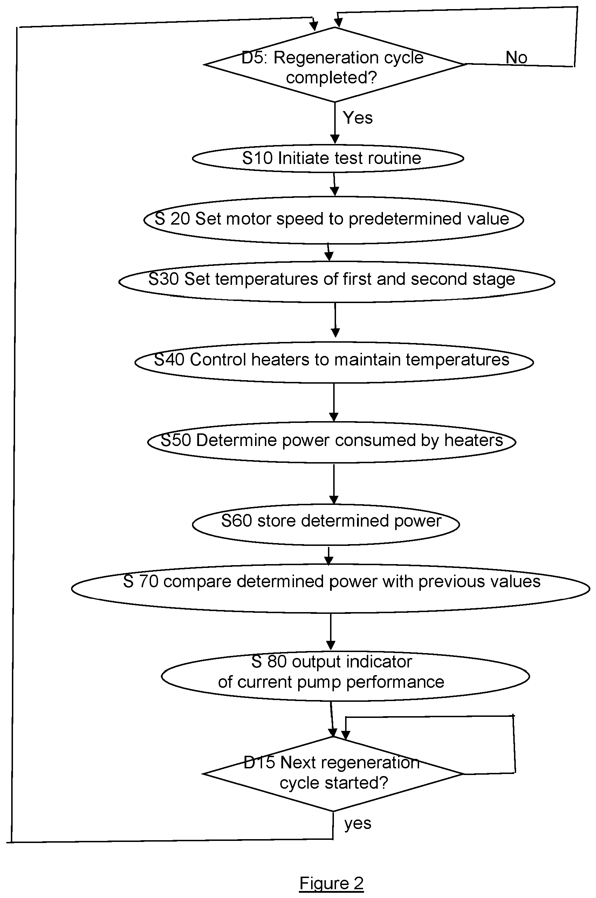

Figure 2 shows a flow diagram illustrating steps in a method of monitoring the performance or health of the pump according to an embodiment. Initially at step D5 it is determined whether a regeneration cycle has completed or not.

When it is determined that it has completed a test routine is initiated at step S10. In this regard, in some embodiments instead of S10 being performed after each regeneration cycle, it may only be initiated after completion of a certain number of regeneration cycles. In which case there may be an intermediate step to determine whether a counter has counted up to this certain number, the counter being incremented after each regeneration cycle has completed.

Once the test routine has been initiated then at step S20 the speed of the motor is set to a predetermined value and cooling of the cryopump starts. The temperatures of the first and second stage are set to a predetermined value in step S30. The predetermined temperatures and speed of the motor may be set values in the control/diagnostic circuitry, and/or they may be values that may be updated in response to an input by a service engineer. In step S40 the heaters are controlled to maintain the temperature of the first and second stage refrigerators at the desired predetermined temperatures. The power consumed by the heaters to maintain the temperatures is indicative of the current performance of the cryopump and thus, in step S50 the power applied to and consumed by the heaters is determined and this value is stored as an indication of the performance of the pump in step S60. This value may be stored alongside an indication of the regeneration cycle that the test routine from which the value was derived was performed after.

At S70 the current power may be compared with previous values to determine a change and/or a rate of change in the performance of the pump. This alongside the actual determined power value can be used to determine the current pump performance. In some embodiments an indicator of current performance may be output at step S80. The regeneration cycle and testing of the pump is now complete and normal operation is resumed. The diagnostic circuitry then proceeds to determine when the next regeneration cycle has started at step D15 and when it has it waits until the cycle has completed before it may again initiate the test routine at S10.

Although illustrative embodiments of the invention have been disclosed in detail herein, with reference to the accompanying drawings, it is understood that the invention is not limited to the precise embodiment and that various changes and modifications can be effected therein by one skilled in the art without departing from the scope of the invention as defined by the appended claims.

### REFERENCE SIGNS

- 5: cryopump
- 7: inlet
- 10: cryopanels
- 12a, 12b: temperature sensors
- 13: data store
- 14: control and diagnostic circuitry
- 16: refrigerator unit
- 17: variable speed motor
- 18a, 18b: heaters
- 19: input/output port

## Claims

1. A method of monitoring the performance of a cryopump (5), said method comprising:
following completion of a regeneration cycle controlling said cryopump to perform a predetermined test routine for testing a performance of said cryopump under predetermined conditions;
monitoring said cryopump during said predetermined test routine to collect data indicative of said performance of said cryopump; and storing said data indicative of said performance collected during said monitoring;
**characterised in that** said step of controlling said cryopump to perform a predetermined test routine comprises:
controlling a variable speed motor controlling (17) a flow of refrigerant through a refrigerating system of said cryopump to operate at a predetermined speed;
setting a first predetermined temperature for a first stage of a refrigerator and a second predetermined temperature for a second stage of said refrigerator; and
controlling heaters associated with said first and second stages of said refrigerator such that said first and second predetermined temperatures are maintained; and
said step of determining the performance of said cryopump comprises determining power applied to said heaters maintaining said first and second predetermined temperatures.

2. A method according to claim 1, said method controlling said cryopump to perform said predetermined test routine periodically after at least a subset of said regeneration cycles.

3. A method according to claim 1 or 2, comprising a further step of determining said performance of said pump from said collected data.

4. A method according to claim 3, wherein said step of determining said performance of said pump comprises comparing data obtained from a current test routine with data obtained from previous test routines.

5. A method according to any preceding claim, said method comprising a further step of outputting data indicative of said pump performance.

6. A method according to claim 5, wherein said step of outputting said data comprises receiving a request for said data and outputting said data in response to said request.

7. Control and diagnostic circuitry for a cryopump (5),
said control circuitry being configured to determine when a regeneration cycle has completed and to control said cryopump following completion of said regeneration cycle to perform a predetermined test routine for testing a performance of said cryopump under predetermined conditions; and
said diagnostic circuitry (14) is configured to:
monitor said performance of said cryopump during said predetermined test routine; and
store data indicative of said performance obtained from said monitoring,
preferably wherein said control circuitry being configured to control said cryopump to perform said predetermined test routine periodically after at least a subset of said regeneration cycles and **characterised in that** said control circuitry is configured to control said cryopump to perform said predetermined test routine by:
controlling a variable speed motor controlling a flow of refrigerant through a refrigerating system of said cryopump to operate at a predetermined speed;
setting a first predetermined temperature for a first stage of a refrigerator and a second predetermined temperature for a second stage of said refrigerator; and
controlling heaters associated with said first and second stages of said refrigerators such that said first and second predetermined temperatures are maintained; and
said diagnostic circuitry is configured to determine a power applied to said heaters maintaining said first and second predetermined temperatures.

8. Control and diagnostic circuitry according to claim 7, said diagnostic circuitry being configured to determine a performance of said pump from said collected data, preferably wherein said diagnostic circuitry is configured to determine said performance of said pump by comparing data obtained from a current test routine with data obtained from previous test routines.

9. Control and diagnostic circuitry according to any one of claims 7 and 8 said diagnostic circuitry being configured to output data indicative of said pump performance, preferably wherein said diagnostic circuitry being configured to output said data in response to receiving a request for said data.

10. A cryopump comprising:
a refrigerator unit;
a variable speed motor for controlling a flow of refrigerant through a cooling system of said cryopump; and
control and diagnostic circuitry according to any one of claims 7 to 9, preferably
wherein said refrigerator unit comprises a two stage refrigerator; and said cryopump further comprises:
a temperature sensor for monitoring a temperature of a first stage of said refrigerator and a temperature sensor for monitoring a temperature of a second stage of said refrigerator; and
a heater for supplying heat to said first stage and a heater for supplying heat to said second stage refrigerator

11. A computer program comprising readable instructions to cause the cryopump of claim 10 to execute the steps of the method according to any one of claims 1 to 6.

## Patentansprüche

1. Verfahren zur Überwachung der Leistung einer Kryopumpe (5), wobei das Verfahren Folgendes umfasst:
nach dem Abschluss eines Regenerationszyklus Steuern der Kryopumpe, um eine vordefinierte Testroutine zum Testen einer Leistung der Kryopumpe unter vorbestimmten Bedingungen auszuführen;
Überwachen der Kryopumpe während der vorbestimmten Testroutine, um Daten zu sammeln, die für die Leistung der Kryopumpe bezeichnend sind; und
Speichern der während des Überwachens gesammelten, für die Leistung bezeichnenden Daten;
**dadurch gekennzeichnet, dass** der Schritt des Steuerns der Kryopumpe, um eine vorbestimmte Testroutine durchzuführen, Folgendes umfasst:
Steuern eines Motors mit variabler Drehzahl, der einen Fluss von Kühlmittel durch ein Kühlsystem der Kryopumpe steuert (17), um bei einer vorbestimmten Drehzahl zu arbeiten;
Einstellen einer ersten vorbestimmten Temperatur für eine erste Stufe einer Kühlvorrichtung und einer zweiten vorbestimmten Temperatur für eine zweite Stufe der Kühlvorrichtung; und
Steuern von Heizvorrichtungen, die der ersten und zweiten Stufe der Kühlvorrichtung zugeordnet sind, sodass die erste und zweite vorbestimmte Temperatur gehalten werden; und
wobei der Schritt des Bestimmen der Leistung der Kryopumpe das Bestimmen der Energie umfasst, die auf die Heizvorrichtungen, die die erste und zweite vorbestimmte Temperatur halten, angewendet wird.

2. Verfahren nach Anspruch 1, wobei das Verfahren das Steuern der Kryopumpe umfasst, um die vorbestimmte Testroutine periodisch nach mindestens einer Teilmenge der Regenerationszyklen durchzuführen.

3. Verfahren nach Anspruch 1 oder 2, umfassend einen weiteren Schritt des Bestimmens der Leistung der Pumpe aus den gesammelten Daten.

4. Verfahren nach Anspruch 3, wobei der Schritt des Bestimmens der Leistung der Pumpe das Vergleichen von aus einer aktuellen Testroutine erhaltenen Daten mit aus früheren Testroutinen erhaltenen Daten umfasst.

5. Verfahren nach einem der vorhergehenden Ansprüche, wobei das Verfahren einen weiteren Schritt des Ausgebens von Daten umfasst, die für die Pumpenleistung bezeichnend sind.

6. Verfahren nach Anspruch 5, wobei der Schritt des Ausgebens der Daten das Empfangen einer Anforderung der Daten und das Ausgeben der Daten in Reaktion auf die Anforderung umfasst.

7. Steuerungs- und Diagnoseschaltung für eine Kryopumpe (5),
wobei die Steuerungsschaltung dazu konfiguriert ist, festzustellen, wann ein Regenerationszyklus abgeschlossen ist, und die Kryopumpe nach Abschluss des Regenerationszyklus zu steuern, um eine vorbestimmte Testroutine zum Testen einer Leistung der Kryopumpe unter vorbestimmten Bedingungen durchzuführen; und
die Diagnoseschaltung (14) dazu konfiguriert ist:
die Leistung der Kryopumpe während der vorbestimmten Testroutine zu überwachen; und
für die Leistung bezeichnende, aus der Überwachung erhaltene Daten zu speichern, wobei die Steuerungsschaltung vorzugsweise dazu konfiguriert ist, die Kryopumpe so zu steuern, dass sie die vorbestimmte Prüfroutine periodisch nach mindestens einer Teilmenge der Regenerationszyklen durchführt, und **dadurch gekennzeichnet, dass** die Steuerungsschaltung dazu konfiguriert ist, die Kryopumpe so zu steuern, dass sie die vorbestimmte Prüfroutine durchführt durch:
Steuern eines Motors mit variabler Drehzahl, der einen Fluss von Kühlmittel durch ein Kühlsystem der Kryopumpe steuert, um bei einer vorbestimmten Drehzahl zu arbeiten; Einstellen einer ersten vorbestimmten Temperatur für eine erste Stufe einer Kühlvorrichtung und einer zweiten vorbestimmten Temperatur für eine zweite Stufe der Kühlvorrichtung; und
Steuern von Heizvorrichtungen, die der ersten und zweiten Stufe der Kühlvorrichtungen zugeordnet sind, sodass die erste und zweite vorbestimmte Temperatur gehalten werden; und
wobei die Diagnoseschaltung dazu konfiguriert ist, eine Energie zu bestimmen, die auf die Heizvorrichtungen, die die erste und zweite vorbestimmte Temperatur halten, angewendet wird.

8. Steuerungs- und Diagnoseschaltung nach Anspruch 7, wobei die Diagnoseschaltung dazu konfiguriert ist, aus den gesammelten Daten eine Leistung der Pumpe festzulegen, wobei die Diagnoseschaltung vorzugsweise dazu konfiguriert ist, die Leistung der Pumpe durch Vergleichen von aus einer aktuellen Testroutine erhaltenen Daten mit aus früheren Testroutinen erhaltenen Daten zu bestimmen.

9. Steuerungs- und Diagnoseschaltung nach einem der Ansprüche 7 und 8, wobei die Diagnoseschaltung dazu konfiguriert ist, für die Pumpenleistung bezeichnende Daten auszugeben, wobei die Diagnoseschaltung vorzugsweise dazu konfiguriert ist, die Daten in Reaktion auf das Empfangen einer Anforderung der Daten auszugeben.

10. Kryopumpe, umfassend:
eine Kühleinheit;
einen Motor mit variabler Drehzahl zum Steuern eines Flusses von Kühlmittel durch ein Kühlsystem der Kryopumpe; und
eine Steuerungs- und Diagnoseschaltung nach einem der Ansprüche 7 bis 9,
wobei die Kühleinheit vorzugsweise eine zweistufige Kühlvorrichtung umfasst und die Kryopumpe ferner Folgendes umfasst:
einen Temperatursensor zum Überwachen einer Temperatur einer ersten Stufe der Kühlvorrichtung und einen Temperatursensor zum Überwachen einer Temperatur einer zweiten Stufe der Kühlvorrichtung; und
eine Heizvorrichtung zum Zuführen von Wärme zu der ersten Stufe und eine Heizvorrichtung zum Zuführen von Wärme zu der zweiten Stufe der Kühlvorrichtung.

11. Computerprogrammprodukt, umfassend lesbare Anweisungen, um die Kryopumpe nach Anspruch 10 zu veranlassen, die Schritte des Verfahrens nach einem der Ansprüche 1 bis 6 auszuführen.

## Revendications

1. Procédé de surveillance de la performance d'une cryopompe (5), ledit procédé comprenant:
après l'achèvement d'un cycle de régénération, la commande de ladite cryopompe pour effectuer une routine de test prédéterminée pour tester une performance de ladite cryopompe dans des conditions prédéterminées;
la surveillance de ladite cryopompe pendant ladite routine de test prédéterminée pour recueillir des données indicatives de ladite performance de ladite cryopompe; et
le stockage desdites données indicatives de ladite performance recueillies pendant ladite surveillance;
**caractérisé en ce que** ladite étape de commande de ladite cryopompe pour effectuer une routine de test prédéterminée comprend:
la commande d'un moteur à vitesse variable (17) commandant un flux de fluide frigorigène à travers un système de réfrigération de ladite cryopompe pour qu'il fonctionne à une vitesse prédéterminée;
le réglage d'une première température prédéterminée pour un premier étage d'un réfrigérateur et d'une seconde température prédéterminée pour un second étage dudit réfrigérateur; et
la commande d'éléments chauffants associés auxdits premier et second étages dudit réfrigérateur de telle sorte que lesdites première et seconde températures prédéterminées soient maintenues; et
ladite étape de détermination de la performance de ladite cryopompe comprend la détermination de la puissance appliquée auxdits éléments chauffants maintenant lesdites première et seconde températures prédéterminées.

2. Procédé selon la revendication 1, ledit procédé commandant ladite cryopompe pour effectuer ladite routine de test prédéterminée périodiquement après au moins un sous-ensemble desdits cycles de régénération.

3. Procédé selon la revendication 1 ou 2, comprenant une étape supplémentaire de détermination de ladite performance de ladite pompe à partir desdites données recueillies.

4. Procédé selon la revendication 3, dans lequel ladite étape de détermination de ladite performance de ladite pompe comprend la comparaison de données obtenues à partir d'une routine de test actuelle avec des données obtenues à partir de routines de test précédentes.

5. Procédé selon l'une quelconque des revendications précédentes, ledit procédé comprenant une étape supplémentaire de fourniture en sortie de données indicatives de ladite performance de la pompe.

6. Procédé selon la revendication 5, dans lequel ladite étape de fourniture en sortie desdites données comprend la réception d'une demande pour lesdites données et la fourniture en sortie desdites données en réponse à ladite demande.

7. Circuit de commande et de diagnostic pour une cryopompe (5), ledit circuit de commande étant configuré pour déterminer quand un cycle de régénération est achevé et pour commander ladite cryopompe après l'achèvement dudit cycle de régénération pour effectuer une routine de test prédéterminée pour tester une performance de ladite cryopompe dans des conditions prédéterminées; et
ledit circuit de diagnostic (14) est configuré pour:
surveiller ladite performance de ladite cryopompe pendant ladite routine de test prédéterminée; et
stocker des données indicatives de ladite performance obtenues à partir de ladite surveillance,
de préférence dans lequel ledit circuit de commande étant configuré pour commander ladite cryopompe pour effectuer ladite routine de test prédéterminée périodiquement après au moins un sous-ensemble desdits cycles de régénération et **caractérisé en ce que** ledit circuit de commande est configuré pour commander ladite cryopompe pour effectuer ladite routine de test prédéterminée en:
commandant un moteur à vitesse variable commandant un flux de fluide frigorigène à travers un système de réfrigération de ladite cryopompe pour qu'il fonctionne à une vitesse prédéterminée;
réglant une première température prédéterminée pour un premier étage d'un réfrigérateur et une seconde température prédéterminée pour un second étage dudit réfrigérateur; et
commandant des éléments chauffants associés auxdits premier et second étages dudit réfrigérateur de telle sorte que lesdites première et seconde températures prédéterminées soient maintenues; et
ledit circuit de diagnostic est configuré pour déterminer une puissance appliquée auxdits éléments chauffants maintenant lesdites première et seconde températures prédéterminées.

8. Circuit de commande et de diagnostic selon la revendication 7, ledit circuit de diagnostic étant configuré pour déterminer une performance de ladite pompe à partir desdites données recueillies, de préférence dans lequel ledit circuit de diagnostic est configuré pour déterminer ladite performance de ladite pompe en comparant des données obtenues à partir d'une routine de test actuelle avec des données obtenues à partir de routines de test précédentes.

9. Circuit de commande et de diagnostic selon l'une quelconque des revendications 7 et 8, ledit circuit de diagnostic étant configuré pour fournir en sortie des données indicatives de ladite performance de la pompe, de préférence dans lequel ledit circuit de diagnostic étant configuré pour fournir en sortie lesdites données en réponse à la réception d'une demande pour lesdites données.

10. Cryopompe comprenant:
une unité de réfrigération;
un moteur à vitesse variable pour commander un flux de fluide frigorigène à travers un système de refroidissement de ladite cryopompe; et
un circuit de commande et de diagnostic selon l'une quelconque des revendications 7 à 9,
de préférence
dans lequel ladite unité de réfrigération comprend un réfrigérateur à deux étages; et ladite cryopompe comprend en outre:
un capteur de température pour surveiller une température d'un premier étage dudit réfrigérateur et un capteur de température pour surveiller une température d'un second étage dudit réfrigérateur; et
un élément chauffant pour fournir de la chaleur audit premier étage et un élément chauffant pour fournir de la chaleur audit second étage dudit réfrigérateur.

11. Programme informatique comprenant des instructions lisibles pour amener la cryopompe selon la revendication 10 à exécuter les étapes du procédé selon l'une quelconque des revendications 1 à 6.
